(19) Europäisches Patentamt / European Patent Office / Office européen des brevets

(11) **EP 2 988 932 B1**

(12) **EUROPEAN PATENT SPECIFICATION**

(45) Date of publication and mention
of the grant of the patent:
**16.02.2022 Bulletin 2022/07**

(21) Application number: **14788019.9**

(22) Date of filing: **18.04.2014**

(51) International Patent Classification (IPC):
**C08K 3/20** *(2006.01)*    **C08L 23/06** *(2006.01)*
**C08L 23/12** *(2006.01)*    **C08J 3/22** *(2006.01)*
**C08K 5/053** *(2006.01)*    **C08L 91/00** *(2006.01)*
**C08L 83/04** *(2006.01)*    **C08L 23/02** *(2006.01)*
**B29C 49/04** *(2006.01)*

(52) Cooperative Patent Classification (CPC):
(C-Sets available)
**C08J 3/226; C08K 3/20; C08K 5/053; C08L 23/02;**
**C08L 23/06; C08L 23/12;** B29C 49/04;
C08J 2323/06; C08K 2201/019; C08L 83/04;
C08L 91/00                    (Cont.)

(86) International application number:
**PCT/CN2014/075672**

(87) International publication number:
**WO 2014/173251 (30.10.2014 Gazette 2014/44)**

(54) **A GLOSSY CONTAINER**

GLÄNZENDER BEHÄLTER

RÉCIPIENT BRILLANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2013 PCT/CN2013/074823**

(43) Date of publication of application:
**02.03.2016 Bulletin 2016/09**

(73) Proprietor: **The Procter & Gamble Company
Cincinnati, OH 45202 (US)**

(72) Inventors:
• **WANG, Ping
  Beijing 101312 (CN)**
• **YANG, Liang
  Beijing 101312 (CN)**

(74) Representative: **P&G Patent Belgium UK
N.V. Procter & Gamble Services Company S.A.
Temselaan 100
1853 Strombeek-Bever (BE)**

(56) References cited:
**EP-A1- 2 116 475        EP-A2- 0 254 668
WO-A1-2012/062215        CN-A- 1 906 248
CN-A- 102 002 217        GB-A- 1 555 842
JP-A- H0 538 787         US-A- 4 837 262
US-A1- 2004 236 025      US-A1- 2010 040 813
US-B2- 7 195 806**

• **DATABASE WPI Week 199813 Thomson
Scientific, London, GB; AN 1998-139659
XP002736881, -& JP H10 16095 A (KAO CORP) 20
January 1998 (1998-01-20)**
• **DATABASE WPI Week 200172 Thomson
Scientific, London, GB; AN 2001-621570 & JP
2001 240618 A (JAPAN POLYCHEM CORP) 4
September 2001 (2001-09-04)**
• **DATABASE WPI Week 199734 Thomson
Scientific, London, GB; AN 1997-368314 & JP H09
155958 A (MITSUI TOATSU CHEM INC) 17 June
1997 (1997-06-17)**

(52) Cooperative Patent Classification (CPC): (Cont.)

C-Sets
**C08K 3/20, C08L 23/06;**
**C08K 5/053, C08L 23/06;**
**C08L 23/06, C08L 91/00;**
**C08L 23/12, C08L 83/04**

C-Sets

**Description**

FIELD OF THE INVENTION

The present invention relates to a glossy container comprising a layer having a thermoplastic material and an additive, and a process for making the container.

BACKGROUND OF THE INVENTION

Containers made of thermoplastic materials have been used to package a wide variety of consumer products, such as cosmetic, shampoo, laundry, and food. For such containers, having a glossy appearance is particularly appealing to users. A glossy effect or pearl-like luster effect or metallic luster effect, traditionally provided by the addition of pearlescent agents, tends to connote a premium product.

Thermoplastic materials having relatively high transmittance, e.g., polyethylene terephthalate (PET), are known to be more readily capable of achieving a glossy effect. Without wishing to be bound by theory, such higher transmittance thermoplastic materials allow more light to be transmitted, thus being applicable to a greater number of approaches that adjust light reflection and refraction therein to achieve the glossy effect, e.g., by adding additives, or by modifying the material per se.

However, for thermoplastic materials having relatively low transmittance, it is challenging to achieve a glossy appearance. This is mainly due to these materials, e.g., polyethylene (PE), polypropylene (PP), and polystyrene (PS), intrinsically absorbing and/or reflecting more of the incident light that strikes their surface and therefore leaving less light to be transmitted inside to render a light interference effect (which is a characteristic of the glossy effect). Therefore, such materials typically do not deliver a desirable glossy effect. Moreover, these lower transmittance materials are typically manufactured by extrusion blow molding (EBM). EBM in general leads to a less smooth surface, as compared to injection stretch blow molding (ISBM) that is typically used to manufacture PET containers, and therefore further increases the difficulty for achieving a glossy effect. Selection of thermoplastic materials of specific weight distribution (e.g., metallocene PE) can also improve glossiness, but often these materials can be more expensive than more commodity materials.

WO12/062215 discloses a pearlescent container comprising a thermoplastic material having a Total Luminous Transmittance value of at least about 80%, and a siloxane fluid having a viscosity of no greater than about 1,000,000 cst.

Thus, there is a need to provide a glossy container made from a broader range of thermoplastic materials that are not available before, particularly from those having relatively low transmittance.

It is an advantage of the present invention to expand the glossy effect for a broader range of processes, methods, and conditions, e.g., EBM.

It is another advantage of the present invention to provide a glossy container that allows ease and efficiency of recycling, or at least improves the recyclability of glossy containers.

It is yet another advantage of the present invention to provide a glossy container without incorporating or minimizing expensive ingredients, e.g. metallocene thermoplastic materials, pearlescent agents.

SUMMARY OF THE INVENTION

In one aspect, the present invention is directed to a glossy container in accordance with the claims.

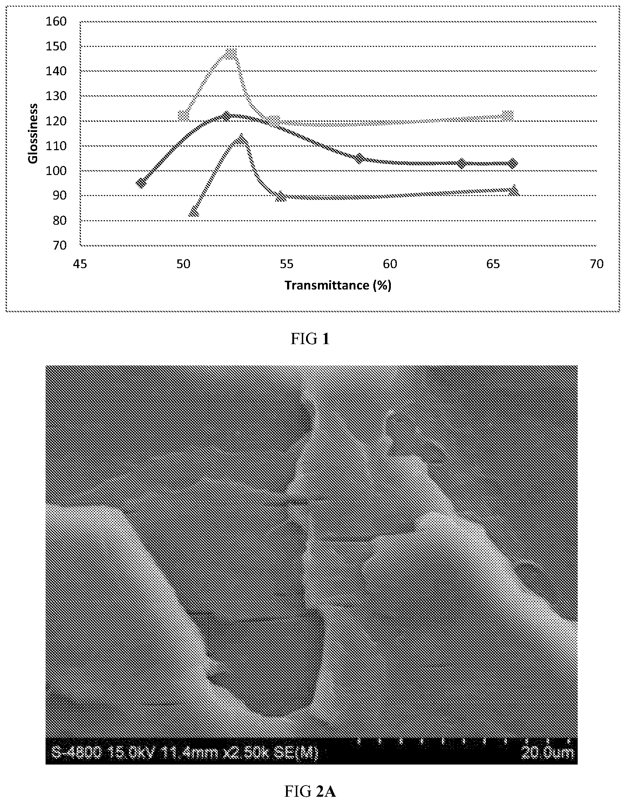

In the present invention, applicant believes that a Total Luminous Transmittance Value of about 53% constitutes a key criterion for a container to deliver a desirable glossy effect. Fig. 1 shows the correlation between transmittance and glossiness as it relates to polyethylene terephthalate (PET). The Glossiness Values of containers having different transmittance are tested (the different transmittance is achieved by having different thermoplastic material and/or additives for the container. The three curves in Fig. 1 represent containers made by blow molding processes having different stretch ratios). As shown in Fig. 1, the containers having a Total Luminous Transmittance Value of about 53% demonstrate the best glossy effect. By analogy, applicant believes the same to be true for materials like polyethylene (PE) and polypropylene (PP).

Without wishing to be bound by theory, it is believed that the glossy effect is caused by a light interference effect between incident light and reflected light. A Total Luminous Transmittance Value of about 53% is a critical point that best balances the amount of the incident light, transmitted light, absorbed light, reflected light, refracted light, etc, to provide a desirable glossy effect. Therefore, in order to achieve the Total Luminous Transmittance Value of about 53% or at least being closer to 53%, for those unmodified thermoplastic materials having a Total Luminous Transmittance Value greater than this critical point, approaches to lowering the transmittance of the thermoplastic materials are needed.

Adding an additive into a thermoplastic material and forming a micro-layering structure therebetween, is the approach taken by the present invention to lowering the transmittance of the thermoplastic material. Specifically, applicant has surprisingly found that by selecting an additive which has sufficiently different values of a Solubility Parameter and a Refractive Index, versus the unmodified thermoplastic material, lower transmittance of the thermoplastic material is obtainable. Specifically, if the thermoplastic material and additive have: a Solubility Parameter difference of from about $0.5$ cal$^{1/2}$cm$^{-3/2}$ to about 20 cal$^{1/2}$cm$^{-3/2}$ and a Refractive Index difference of from about 0.1 to about 1.5, the Total Luminous Transmittance Value can be lowered to the desired Value of about 53% thereby achieving the desired glossy effect. Without wishing to be bound by theory, the required Solubility Parameter difference ensures that the thermoplastic material and additive are immiscible and the micro-layering structure can be formed (i.e., the additive's micro-domains can be interspersed between the thermoplastic material's micro-layers). A relatively large Refractive Index difference between the thermoplastic material and additive is required to allow more light to reflect and refract in the thermoplastic material, thus lowering the transmittance of the thermoplastic material.

Having selected the appropriate additive, the formation of the micro-layering structure of the thermoplastic material and micro-domains of the additive dispersed therein, occurs during a blow molding process. The additive is preferably not added to the thermoplastic material while the material is hot. Rather, the additive is preferably added under ambient temperature to minimize chemical bonding between the additive and the thermoplastic material. For example, flakes of thermoplastic material are mixed with the additive to form an admixture. Without wishing to be bound, it is the immiscibility between the additive and thermoplastic material that contributes to the glossy effect. During the blow molding process, the stretching of thermoplastic material occurs during the step where the thermoplastic material and additive admixture are expanded by air pressure against the surface of the mold. A micro-layering structure of thermoplastic materials with interspersed immiscible domains of additive is formed. The glossy effect is produced by light entering this micro-layering structure and reflecting and refracting within the structure when striking the micro-layers of thermoplastic material as well as the micro-domains of additive, thereby producing a light interference effect. It is the light interference effect that provides the glossy appearance.

In another aspect, the present invention is directed to a process for making a glossy container, according to the claims.

BRIEF DESCRIPTION OF THE DRAWINGS

FIG. **1** is a graph showing the correlation between transmittance and glossiness.
FIG. **2A** is Scanning Electron Microscope (SEM) image with 2,500 magnitude, showing a micro-layering structure formed in the container of Example 8.
FIG. **2B** is a SEM image with 30,000 magnitude, showing the micro-domains of the additive interspersed within the thermoplastic material in the container of Example 8.
FIG. **3** is a SEM image with 2,500 magnitude of the container of Comparative Example 9.

DETAILED DESCRIPTION OF THE INVENTION

Definitions

As used herein, the term "glossy" refers to a pearl-like luster effect or metallic luster effect. The measurement method for the glossiness (i.e., glossy effect) of a container is described hereinafter.

As used herein, the term "transmittance" refers to the percentage of transmitted light to incident light. One way to characterize the transmittance of a material is the parameter "Total Luminous Transmittance (Tt)". The Tt is tested according to ASTM D-1003 "Standard Test Method for Haze and Luminous Transmittance of Transparent Plastics". A sample thickness of 0.8 mm and a tungsten lamp light source are used for the Tt measurement herein.

As used herein, the term "Solubility Parameter ($\delta$)" provides a numerical estimate of the degree of interaction between materials. A Solubility Parameter difference between materials indicates miscibility of the materials. For example, materials with similar $\delta$ values are likely to be miscible, and materials having a larger $\delta$ difference tend to be more immiscible. The Hildebrand Solubility Parameter is used herein for purposes to characterize a material's $\delta$. The calculation method of the Hildebrand $\delta$ and the $\delta$ data of certain example materials are described hereinafter.

As used herein, the term "Refractive Index (RI)" means a ratio of the speed of light in vacuum relative to that in another medium. RI ($nD25$) data is used herein, where $nD25$ refers to the RI tested at 25 °C and D refers to the D line of the sodium light. The calculation method of the RI ($nD25$) and the RI ($nD25$) data of certain example materials are described hereinafter.

As used herein, the term "micro-layering structure" herein refers to micro-layers of the thermoplastic material in lamellar form interspersed with micro-domains of the additive in one macro-layer of the container. The additive micro-domains interspersed between the thermoplastic material micro-layers can be in the form of a whole coherent piece, or can be in the form of a number of segregated pieces. The micro-layering structure, particularly the spaces between each micro-layer of the thermoplastic material and between the micro-domains of the interspersed additive, is on a nano-scale, preferably from about 1 - 5 nanometers to about 100 - 500 nanometers.

As used herein, the term "layer" means a macro-scale layer of the material forming a container, as opposed to the nano-scale micro-layers in the above mentioned micro-layering structure. Typically, the macro-scale layer has a thickness of from about 0.01 mm to about 10 mm, alternatively from about 0.1 mm to about 5 mm, alternatively from about 0.2 mm to about 1 mm.

As used herein, the term "blow mold" refers to a manufacturing process by which hollow cavity-containing plastic containers are formed, preferably suitable for containing compositions. The blow molding process typically begins with melting or heat-softening plastic and forming it into a closed tube-like structure with a single opening in one end of the structure which air can pass into (e.g., a parison for extrusion blow molding (EBM) or a preform for injection blow molding (IBM)). The melted or heated tube-like structure of plastic is then fixed into a mold, and the opening is blown with compressed air. The air pressure pushes or "blows" the plastic out to conform to the shape of the mold. Once the plastic has cooled, the mold opens and the formed container is ejected. In general, there are three main types of blow molding: EBM, IBM, and injection stretch blow molding (ISBM).

As used herein, when a composition is "substantially free" of a specific ingredient, it is meant that the composition comprises less than a trace amount, alternatively less than 0.1%, alternatively less than 0.01%, alternatively less than 0.001%, by weight of the composition of the specific ingredient.

Glossy Container

The glossy container is blow molded and comprises a layer that comprises the thermoplastic material and additive as described herein. The term "container" herein refers to packaging suitable for containing compositions. The compositions contained in the container may be any of a variety of compositions including, but not limited to, detergents (e.g., laundry care, dish care, skin and hair care), beverages, powders, paper (e.g., tissues, wipes), beauty care compositions (e.g., cosmetics, lotions), medicinal, oral care (e.g., tooth paste, mouth wash), and the like. The compositions may be liquid, semi-liquid, solid, semi-solid, or combinations thereof. The container may be used to store, transport, or dispense compositions contained therein. Non-limiting volumes containable within the container are from 10 ml to 5000 ml, alternatively from 100 ml to 4000 ml, alternatively from 500 ml to 1500 ml, alternatively 1000 ml to 1500 ml. The containers may include closures or dispensers. The term "container" is used herein to broadly include these elements of a container. Non-limiting examples of containers include a bottle, a tottle, ajar, a cup, a cap, and the like.

In terms of glossiness, the container of the present invention preferably delivers an improved glossy effect over those containers made of unmodified thermoplastic materials, according to the test method for glossiness as described hereinafter in the present invention. When the glossiness data of two samples are compared, a difference of -5/+5 represents a difference that is user noticeable. In terms of smoothness, the container of the present invention preferably has a Roughness Value (Ra) of from about 0.90 nm to about 5 nm, alternatively from about 0.95 nm to about 4 nm, alternatively from 0.98 nm to about 3 nm, according to the test method for smoothness as described hereinafter in the present invention.

The container comprises multiple layers of thermoplastic material comprising an outer layer and an inner layer. The inner layer is in nearer proximity to the composition contained in the container than the outer layer. The inner layer may make contact with the contained composition. The outer layer is further away in proximity to the composition contained in the container as compared to the inner layer. The outer layer may form the outermost surface of the container. Alternatively, one or more middle layers may be located in between the inner layer and the outer layer. In one embodiment, the container is composed of two layers of thermoplastic material. The outer layer and the inner layer may be independently selected from PE, PP, and PS. For example, a two-layer container is a PE/PE container or a PET/PE container. In another embodiment, the container is composed of three or more layers of the thermoplastic material.

The container of the present invention comprises multiple layers, wherein at least one layer of the multiple layers comprises the thermoplastic material and additive as described herein. In one embodiment, the one layer comprising the thermoplastic material and additive as described herein is in the outermost layer of the multiple layers. As such, the glossy appearance is visible to a user when viewing the container, e.g., on a store shelf. For example, the container may be a two-layer container of BOPP/PE wherein the PE is the outer layer, and the additive is present in the outer PE layer. In an alternative example, the one layer comprising the thermoplastic material and additive as described herein is in the inner layer of the multiple layers, and the outermost layer is transparent or at least substantially transparent or translucent, and so the glossy appearance is visible to a user by looking through the transparent or translucent outermost layer to the inner glossy layer of the container. Alternatively, each of the layers of the multiple layers comprises the thermoplastic material and additive as described herein.

Thermoplastic Material

The glossy container of the present invention comprises a layer, and the layer comprises from about 86% to about 99.99%, preferably from about 90% to about 99.8%, more preferably from about 95% to about 99.6%, by weight of one layer of the container, of a thermoplastic material having a Total Luminous Transmittance Value of from about 53% to about 80%. The thermoplastic material is selected from the group consisting of polyethylene (PE), polypropylene (PP), polystyrene (PS), and a combination thereof. These materials are typically not available for making glossy containers in the art. Thus, the present invention significantly broadens the ranges of applicable thermoplastic materials to provide a glossy container.

Preferably, the thermoplastic material is PE. More preferably, the PE is selected from the group consisting of low density polyethylene (LDPE), linear low density polyethylene (LLDPE), and a combination thereof. The LDPE and LLDPE typically have a Total Luminous Transmittance Value of from about 53% to about 80%, whereas high density polyethylene (HDPE) typically has a Total Luminous Transmittance Value of lower than 53%.

Alternatively, the thermoplastic material comprises a mixture of PE or PP or PS with a polymer selected from the group consisting of polybutylene terephthalate (PBT), polyethylene terephthalate (PET), polycarbonate (PC), acrylonitrile butadiene styrene (ABS), styrene butadiene copolymer (SBS), polyamide (PA), acrylonitrile-styrene copolymer (AS), styrenebutadiene block copolymer (SBC), polylactic acid (PLA), and a combination thereof. When two or more types of the abovementioned thermoplastic materials are used, it is preferred that one major thermoplastic material is used which constitutes at least about 86%, alternatively about 91%, alternatively about 95%, alternatively about 98%, by weight of the total mixture of the two or more types of the thermoplastic materials. Preferably, the major thermoplastic material is PE or PP or PS, more preferably is PE, even more preferably is LDPE or LLDPE.

Recycled thermoplastic materials can be used in the present invention. In one embodiment, the thermoplastic material includes a polymer selected from the group consisting of post-consumer recycled polyethylene (PCRPE); post-industrial recycled polyethylene (PIR-PE); regrind polyethylene; and a combination thereof. The container made from the thermoplastic material can be recyclable as well.

The thermoplastic material herein may be formed by using a combination of monomers derived from renewable resources and monomers derived from non-renewable (e.g., petroleum) resources. For example, the thermoplastic material may comprise polymers made from bio-derived monomers in whole, or comprise polymers partly made from bio-derived monomers and partly made from petroleum-derived monomers.

The thermoplastic material herein could be those having relatively narrow weight distribution, e.g., metallocene PE polymerized by using metallocene catalysts. These materials can improve glossiness, and thus in the metallocene thermoplastic material execution, the formed container has further improved glossiness. But the metallocene thermoplastic materials often can be more expensive than more commodity materials. Therefore, in an alternative embodiment, the present container is substantially free of the expensive metallocene thermoplastic materials, alternatively less than 0.1%, alternatively less than 0.01%, alternatively less than 0.001%, by weight of the layer of the metallocene thermoplastic material, whilst delivering a glossy appearance.

Additive

The glossy container of the present invention comprises a layer, and the layer comprises from about 0.01% to about 5%, preferably from about 0.03% to about 4%, more preferably from about 0.05% to about 3%, even more preferably from about 0.1% to about 2%, by weight of the layer, of an additive. The amount of the additive present in the layer of the glossy container is relatively low, thus allowing ease and efficiency of recycling. It is desired to reduce the amount of non-thermoplastic materials (e.g., pearlescent agents, colorants) in a container to improve the recyclability of the container in the prior art. However, traditionally a glossy container requires a relatively high amount of non-thermoplastic materials. By contrast, in the present invention, applicant has surprisingly found that, a recyclable, glossy container is obtained without having to require a relatively high amount of non-thermoplastic materials.

The additive is selected from the group consisting of an alcohol, oil, siloxane fluid, water, and a combination thereof, and wherein said additive comprises a plant oil selected from the group consisting of sesame oil, soybean oil, peanut oil, olive oil, castor oil, cotton seed oil, palm oil, canola oil, safflower oil, sunflower oil, com oil, tall oil, rice bran oil, derivatives thereof, and a combination thereof.

In one embodiment, the additive comprises an alcohol. The alcohol is preferably selected from the group consisting of diol, triol, and a combination thereof. More preferably, the alcohol is selected from the group consisting of ethylene glycol, propylene glycol, glycerol, butanediol, butanetriol, poly(propylene glycol), derivatives thereof, and a combination thereof. Most preferably, the additive is glycerol.

Additive oils ca be selected from the group consisting of a plant oil, an animal oil, a petroleum-derived oil, and a combination thereof. For example, the additive could be an animal oil selected from the group consisting of tallow, lard, and a combination thereof. Preferably, the additive is a plant oil. The plant oil is selected from sesame oil, soybean oil, peanut oil, olive oil, castor oil, cotton seed oil, palm oil, canola oil, safflower oil, sunflower oil, corn oil, tall oil, rice bran oil, derivatives thereof, and a combination thereof.

The additive may comprise siloxane fluid. The siloxane fluid preferably has a viscosity of at least about 20 cst, alternatively at least about 50 cst, alternatively at least about 350 cst, alternatively no greater than 10,000 cst, alternatively no greater than 30,000 cst, alternatively no greater than 50,000, alternatively no greater than about 1,000,000 cst under ambient temperature. ASTM D-445 is used herein to measure the viscosity of a material having a viscosity from 20 cst to 1000 cst, and ASTM D-1084 Method B (for cup/spindle) and ASTM D-4287 (for cone/plate) are used to measure the viscosity of a material having a viscosity above 1000 cst.

In even yet another embodiment, the additive may comprise water.

The additive herein is preferably in a liquid form under ambient temperature. Such a liquid additive, on the one hand, enables a more homogeneous blend with the thermoplastic material before the blow molding, and on the other hand, significantly improves the surface smoothness of the container when located on the container's outer surface, versus pearlescent agents that are typically solid.

The additive herein may be either odorous or odorless. In one embodiment, the additive has an odor that matches the perfume of the composition contained in the container, thus attracting users when displayed on shelf or enhancing the perfume performance of the composition when being used. Alternatively, the additive is odorless and therefore does not adversely affect the perfume performance of the composition contained in the container.

The additive herein preferably has a relatively high flash point, alternatively has a flash point of greater than 100°C, alternatively from about 100°C to about 500°C, alternatively from about 150°C to about 400°C. The additive having a relatively high flash point, particularly having a flash point higher than the process temperature conditions (e.g., the typical EBM process temperature of 180°C), is desired as it allows for a safer manufacturing process.

In a preferred embodiment, the glossy container of the present invention comprises a layer, and the layer comprises from about 95% to about 99.6%, by weight of the layer, of LDPE having a Total Luminous Transmittance Value of from about 53% to about 80%; and from about 0.1% to about 2%, by weight of the layer, of glycerol, wherein the LDPE and the glycerol: have a Solubility Parameter difference of from about 0.5 cal$^{1/2}$cm$^{-3/2}$ to about 20 cal$^{1/2}$cm$^{-3/2}$, have a Refractive Index difference of from about 0.1 to about 1.5, and form a micro-layering structure in the layer. More preferably, the container is extrusion blow molded.

Adjunct Ingredient

The container of the present invention may comprise an adjunct ingredient. Preferably, the adjunct ingredient is present in an amount of from about 0.0001% to about 9%, alternatively from about 0.0001% to about 5%, alternatively from about 0.0001% to about 1%, by weight of the one layer of the container, of the adjunct ingredient. Non-limiting examples of the adjunct ingredient include: pearlescent agent, filler, cure agent, anti-statics, lubricant, UV stabilizer, antioxidant, anti-block agent, catalyst stabilizer, colorant, nucleating agent, and a combination thereof. Alternatively, the container is substantially free of one or more of these adjunct ingredients.

The container herein may or may not comprise a pearlescent agent. The term "pearlescent agent" herein refers to a chemical compound or a combination of chemical compounds of which the principle intended function is to deliver a pearlescent effect to a packaging container or a composition.

The pearlescent agent herein could be any suitable pearlescent agents, preferably is selected from the group consisting of mica, $SiO_2$, $Al_2O_3$, glass fiber and a combination thereof. In one embodiment, low amounts of pearlescent agents are used because the present invention provides a glossy effect. For example, the container comprises less than about 0.5%, alternatively less than about 0.1%, alternatively less than about 0.01%, alternatively less than about 0.001%, by weight of the layer, of the pearlescent agent. Preferably, the container is substantially free of a pearlescent agent. Without the incorporation of pearlescent agents or minimizing the amounts of pearlescent agents, the glossy container of the present invention avoids the negative impact of pearlescent agents on the surface smoothness of a container and the recycling issue that the pearlescent agents might have caused. Moreover, particularly in the present invention, the addition of pearlescent agents would disturb the light interference effect rendered by the micro-layering structure, thus adversely affecting the glossy effect.

The container herein may or may not comprise a nucleating agent. Specific examples of the nucleating agent include: benzoic acid and derivatives (e.g., sodium benzoate and lithium benzoate), talc and zinc glycerolate, organocarboxylic acid salts, sodium phosphate and metal salts (e.g., aluminum dibenzoate). The addition of the nucleating agent could improve the tensile and impact properties of the container, as well as prevent the migration of the additive in the container. But in the present invention, since the amount of the additive is relatively low and quite few additive migrations occur, the container could be substantially free of a nucleating agent, alternatively less than about 0.1%, alternatively less than about 0.01%, alternatively less than about 0.001%, by weight of the layer, of the nucleating agent.

## Blow Molding

The blow molding herein could be any one of the three main types of blow molding, namely, EBM, IBM, or ISBM. As aforementioned, the blow molding process, particularly the blow step thereof, enables the formation of the micro-layering structure of the thermoplastic material and additive as described herein, thereby leading to a glossy effect.

Preferably, the blow molding herein is EBM. It has been reported that EBM may not be optimal for producing a glossy container since the lower air pressure (i.e., about 7 bar) during the blow step of EBM leads to a less smooth surface compared to other types of blow molding. This is particularly true when compared with ISBM which results in a relatively smooth surface because of the higher air pressure (i.e., about 15 bar) during the blow step of ISBM. However, a large number of thermoplastic materials, including those having a Total Luminous Transmittance Value of from about 53% to about 80% as required by the present invention (e.g., PE, PP, or PS), are typically processed in EBM, due to their melt strength properties and process requirements. For example, the melt strength of LDPE is too high to be used for ISBM, and therefore LDPE is typically processed in EBM which favors thermoplastic materials having a high melt strength. This means, a significant number of thermoplastic materials that have to be processed in EBM cannot deliver a glossy container by traditional processing conditions. By contrast, in the present invention, it has been surprisingly found that the addition of the additive as described herein improves the surface smoothness of the container made by EBM, and therefore a glossy, extrusion blow molded container is obtainable.

## Process of Making the Container

One aspect of the present invention is directed to a process for making a glossy container as detailed in the claims, comprising the steps of:

a) mixing the thermoplastic material and the additive to form a blow mold blend, wherein the thermoplastic material and the additive: have a Solubility Parameter difference of from about 0.5 $cal^{1/2}cm^{-3/2}$ to about 20 $cal^{1/2}cm^{-3/2}$, and have a Refractive Index difference of from about 0.1 to about 1.5; and
b) blowing the blow mold blend obtained in step a) in a mold to form the glossy container.

Preferably, in step a), the additive is first combined with a carrier (e.g., a thermoplastic material) to form a masterbatch. More preferably, the masterbatch is formed by: mixing the thermoplastic material and additive under ambient temperature; extruding the mixture of the thermoplastic material and additive in an extruder (e.g., a twin screw extruder) to form pellets; and then cooling the pellets in a water bath to form the masterbatch. The step of mixing the thermoplastic material and additive is preferably operated under ambient temperature to minimize chemical bonding between the additive and the thermoplastic material. Then, the masterbatch is mixed with the thermoplastic material to form the blow mold blend, i.e., the additive is added into the thermoplastic material via a masterbatch. The masterbatch may comprise certain adjunct ingredients (e.g., colorants). For example, the masterbatch is typically a color masterbatch used for providing color to a container. The carrier herein may be a different material from the thermoplastic material or the same material as the thermoplastic material. Preferably the carrier is the same material as the thermoplastic material, thereby reducing the number of types of thermoplastic material in the container and allowing ease and efficiency of recycling. Preferably, the masterbatch comprises from about 10% to about 30%, by weight of the masterbatch, of the additive.

Alternatively, in step a), the additive is added into the thermoplastic material directly, i.e., without forming a masterbatch. The combination of the additive and the thermoplastic material is preferably uniformly mixed to form the blow mold blend.

In step b), blowing the blow mold blend can be conducted by any blow molding processes like EBM, IBM, or ISBM. In an ISBM or IBM process, the above blow mold blend is melted and injected into a preform and is followed by a blow molding process or stretch blow molding process. In an EBM process, the above blow mold blend is melted and extruded into a parison and is followed by a blow molding process. The EBM process is preferred. In a multi-layer execution, the container comprising multiple layers is made from multiple layer parisons or preforms depending on types of blow molding.

## Parameters

## Solubility Parameter

The Hildebrand $\delta$ is the square root of the cohesive energy density, as calculated by:

$$\delta = \sqrt{\frac{\Delta H_v - RT}{V_m}}$$

(1)

wherein the cohesive energy density is equal to the heat of vaporization ($\Delta H_v$) divided by molar volume ($V_m$), $R$ is the gas constant (8.314 J·K$^{-1}$mol$^{-1}$), and $T$ is absolute temperature.

The $\delta$ data of various thermoplastic materials and additives can be calculated by the above method and is readily available from books and/or online databases (e.g., "Handbook of Solubility Parameters and Other Cohesion Parameters", Barton, AFM (1991), 2nd edition, CRC Press, and "Solubility Parameters: Theory and Application", John Burke, The Oakland Museum of California (1984)). The $\delta$ values of certain preferred thermoplastic materials and additives are listed in Table 1.

Table 1

| Substance | Hildebrand $\delta$ (cal$^{1/2}$cm$^{-3/2}$) |
|---|---|
| PE | 7.9 |
| PP | 7.6-8.0 |
| PS | 9.11 |
| Ethylene glycol | 16.3 |
| Propylene glycol | 14.8 |
| Glycerol | 21.1 |
| Water | 23.5 |

Refractive Index

The Refractive Index is calculated as:

$$n = \frac{c}{v}$$

(2)

wherein c is the speed of light in vacuum and v is the speed of light in the substance.

The RI (nD25) data of various thermoplastic materials and additives can be calculated by the above method and is readily available from books and/or online RI databases. The RI (nD25) values of certain preferred thermoplastic materials and additives are listed in Table 2. The below typical RI values are only for illustration purpose, and the materials can be customized into different RI.

Table 2

| Substance | Refractive index |
|---|---|
| LDPE | 1.51 |
| LLDPE | 1.50 |
| PP | 1.40-1.47 |
| PS | 1.589 |
| Ethylene glycol | 1.433 |
| Propylene glycol | 1.388 |
| Glycerol | 1.47 |
| Butanediol | 1.44 |
| Butanetriol | 1.46 |
| Poly(propylene glycol) | 1.447 |
| Sesame oil | 1.46 |
| Soybean oil | 1.46 |

(continued)

| Substance | Refractive index |
|---|---|
| Peanut oil | 1.466 |
| Olive oil | 1.466 |
| Castor oil | 1.473-1.477 |
| Cotton seed oil | 1.465 |
| Siloxane fluid | 1.36-1.40 |
| Water | 1.333 |

Test Method

Glossiness

An active polarization camera system called SAMBA is used to measure the specular glossiness of the present container. The system is provided by Bossa Nova Technologies and a polarization imaging software named VAS (Visual Appearance Study software, version 3.5) is used for the analysis. The front labeling panel part of the container is tested against an incident light. An exposure time of 55 sec is used.

The incident light is reflected and scattered by the container. The specular reflected light keeps the same polarization as the incident light and the volume scattered light becomes unpolarized. SAMBA acquires the polarization state of a parallel image intensity (P) contributed by both the reflected and scattered light, and a crossed image intensity (C) of the image contributed only by the scattered light. This allows the calculation of glossiness G given by G = P-C.

Smoothness

The surface smoothness of a container can be characterized by Roughness. The roughness is measured by Atomic Force Microscope (AFM) and. The AFM supplied by Veeco is used herein. It is set at a contact mode for the roughness measurement. The detection area is on the center of the front labeling panel area of the container. An area of 580 nm X 580 nm is used and data is collected as the average value of 10 spots within the detection area.

Roughness measured in nm from AFM measurement can be represented by arithmetic mean value (Ra) of the absolute height yi in vertical direction at specific position i. Ra is represented as:

$$R_a = \frac{1}{n} \sum_{i=1}^{n} |y_i| \tag{3}$$

The Ra value increases with the roughness.

Micro-layering Structure

The micro-layering structure of the thermoplastic material micro-layers interspersed with the additive micro-domains can be observed via Scanning Electron Microscope (SEM) by scanning of the cross-section view of the container microscopically. A HITACHI S-4800 SEM system is used herein.

Example

The Examples herein are meant to exemplify the present invention but are not used to limit or otherwise define the scope of the present invention. Examples 3 and 5 are examples according to the present invention, examples 1, 2 4 and 6-8 are informative, and Example 9 is a comparative Example.

Example 1 - 9: Containers

The following containers shown in Table 3 are made of the listed ingredients in the listed proportions (weight %).

Table 3

|  | 1 | 2 | 3 | 4 | 5 | 6 | 7 | 8 | 9 |
|---|---|---|---|---|---|---|---|---|---|
| LDPE *a* | 99.8 | 99.8 | 99.6 | 0 | 0 | 0 | 0 | 0 | 0 |
| LLDPE *b* | 0 | 0 | 0 | 99.8 | 99.6 | 99.6 | 0 | 0 | 0 |
| PP *c* | 0 | 0 | 0 | 0 | 0 | 0 | 99.6 | 99.5 | 100 |
| Glycerol | 0.2 | 0 | 0 | 0 | 0 | 0.4 | 0 | 0 | 0 |
| Ethylene glycol | 0 | 0.2 | 0 | 0 | 0 | 0 | 0 | 0 | 0 |
| Sesame oil | 0 | 0 | 0.3 | 0 | 0.4 | 0 | 0 | 0 | 0 |
| Siloxane fluid *d* | 0 | 0 | 0 | 0 | 0 | 0 | 0.4 | 0.5 | 0 |
| Water | 0 | 0 | 0 | 0.2 | 0 | 0 | 0 | 0 | 0 |
| Pearlescent agent *e* | 0 | 0 | 0 | 0 | 0 | 0 | 0.01 | 0 | 0 |
| Colorant | 0 | 0 | 0.1 | 0 | 0 | 0 | 0 | 0 | 0 |

*a* commercially available under the name of LDPE 868 from Sinopec *b* commercially available under the name of LLDPE 2036P from Dow *c* commercially available under the name of PP RJ580 from Sumsung Total, having a RI value of 1.47 *d* Polydimethylsiloxanes (at four viscosities 10 cst, 1,000 cst, and 60,000 cst, 1,000,000 cst), having a RI value of 1.37, commercially available under XIAMETER PMX-200 siloxane fluid from Dow Corning *e* commercially available under the name of Taizhu Silver white 1000 from Merck

Processes for making the container of Example 1

The container of Example 1 is manufactured by the following steps:

a) adding glycerol into a carrier of LDPE under ambient temperature to form a mixture, and then extruding the mixture of glycerol and LDPE in a twin screw extruder at a temperature of 260°C to form pellets. Cooling the pellets in a water batch at about 20°C for 0.5 min to form a masterbatch. The glycerol is present in an amount of 10% by weight of the masterbatch. The twin screw extruder has an extruder length/diameter (L/D) of 43 and diameter of 35.6 mm;

b) drying the masterbatch and extra LDPE, separately, for 3 - 4 hours under 120-130°C. Mixing the dried masterbatch and the dried extra LDPE at a let-down ratio of about 0.8% to 8% under ambient temperature to form a blow mold blend; and

c) blowing the blow mold blend obtained in step b) by EBM. Specifically, melting the blow mold blend and extruding it into a tube-like parison, under a temperature of 180°C, under an extrusion pressure of 7 bar, and at an extrusion speed of 60-70 mm/s. Ejecting the parison out of the mold after it is cooled down. Heating and softening the cooled parison with an infrared heating machine at 70-90°C for 2 minutes. Fixing the softened parison into a bottle mold, and blowing the parison into the bottle mold under a blowing pressure of 2.5-3.5 Mpa and at a mold temperature of 20-30°C, by using a blow machine Type CP03-220 from Kai Mei Machinery Co., Ltd. The air pushes the parison out to conform to the shape of the bottle mold. Ejecting the shaped bottle out of the bottle mold after it is cooled down,

wherein in the blow mold blend, each ingredient is present in the amount as specified for Example 1 in Table 3.

Processes of making the containers of Example 2 - 7

The containers of Examples 2 - 7 are manufactured by the same steps as making the container of Example 1, except for that the specific types of the thermoplastic material, additive, and adjunct ingredient (if any), and the amounts thereof are different, as specified for Examples 2 - 7 in Table 3. When present, a pearlescent agent or a colorant is added into the carrier together with the additive to form the masterbatch in step a).

Processes of making the container of Example 8

The container of Example 8 is manufactured by the same steps as making the container of Example 1, except for that: the specific types of the thermoplastic material and additive, and the amounts thereof are different, as specified for Example 8 in Table 3, and in step c) the blowing pressure is 9.5-10.5 Mpa.

Processes of making the container of Comparative Example 9

The container of Comparative Example 9 is manufactured by blowing resin of PP by EBM to form the container. Specifically, melting the resin and extruding it into a tube-like parison, under a temperature of 180°C, under an extrusion pressure of 7 bar, and at an extrusion speed of 60-70 mm/s. Ejecting the parison out of the mold after it is cooled down. Heating and softening the cooled parison with an infrared heating machine at 70-90°C for 2 minutes. Fixing the softened parison into a bottle mold, and blowing the parison into the bottle mold under a blowing pressure of 9.5-10.5 Mpa, under a processing temperature of 190-200°C, and at a mold temperature of 20-30°C, by using a blow machine Type B07 from Kai Mei Machinery Co., Ltd. The air pushes the parison out to conform to the shape of the bottle mold. Ejecting the shaped bottle out of the bottle mold after it is cooled down,
wherein in the blow mold blend, each ingredient is present in the amount as specified for Example 9 in Table 3.

Comparative data of Examples 8 and 9

Comparative experiments of assessing the glossiness of containers of Example 8 and Comparative Example 9 are conducted. The glossiness is measured according to the method for glossiness as described hereinabove and characterized as a Glossiness Value. Table 4 below demonstrates the Glossiness Values of the containers.

Table 4

| Example | 8 | 9 |
|---|---|---|
| Glossiness Value | 62 | 69 |

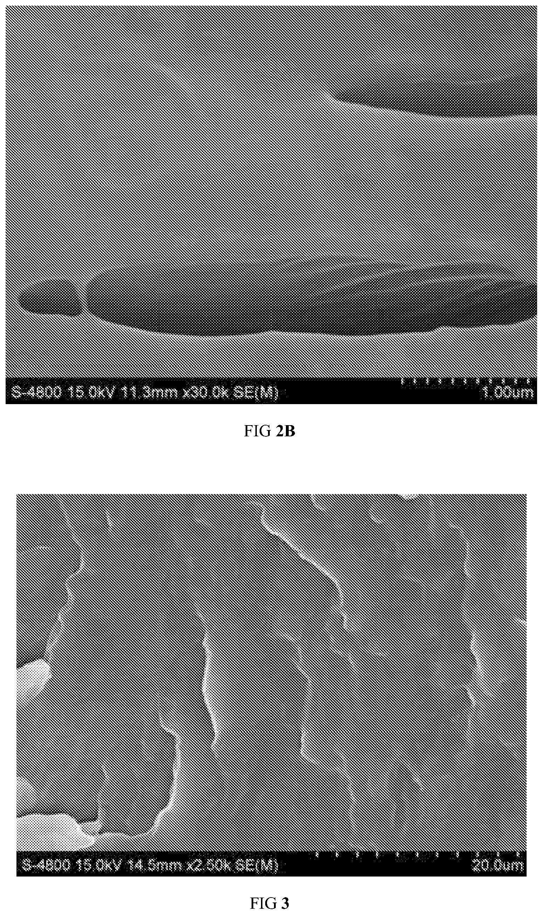

As shown in Table 4, the container according to the present invention (Example 8) demonstrates improved glossiness over the container of comparative example (Example 9).
Moreover, the containers of Examples 8 and 9 are scanned via a HITACHI S-4800 SEM system to illustrate the microstructure thereof. Specifically, samples for scanning are taken from the middle portion of the containers (i.e., at the half height of the containers). FIGs. 2A and 2B show the SEM images of the container of Example 8, in which a micro-layering structure, particularly the interspersed micro-domains of the additive, is clearly observed. By contrast, in the SEM image of the container of Comparative Example 9, as shown in FIG. 3, no such micro-layering structure is observed.
Unless otherwise indicated, all percentages, ratios, and proportions are calculated based on weight of the total composition. All temperatures are in degrees Celsius (°C) unless otherwise indicated. All measurements made are at 25°C, unless otherwise designated. All component or composition levels are in reference to the active level of that component or composition, and are exclusive of impurities, for example, residual solvents or by-products, which may be present in commercially available sources.
It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.
The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".
While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

**Claims**

1.  A glossy container, comprising a layer, wherein said layer comprises:

   a) from 86% to 99.99%, by weight of said layer, of a thermoplastic material having a Total Luminous Transmittance Value following the test method described herein of from 53% to 80%, wherein said thermoplastic material is selected from the group consisting of polyethylene (PE), polypropylene (PP), polystyrene (PS), and a combination thereof; and

b) from 0.01% to 5%, by weight of said layer, of an additive selected from the group consisting of an alcohol, oil, siloxane fluid, water, and a combination thereof, and wherein said additive comprises a plant oil selected from the group consisting of sesame oil, soybean oil, peanut oil, olive oil, castor oil, cotton seed oil, palm oil, canola oil, safflower oil, sunflower oil, corn oil, tall oil, rice bran oil, derivatives thereof, and a combination thereof,

wherein said thermoplastic material and said additive: have a Solubility Parameter difference following the test method described herein of from 0.5 cal$^{1/2}$cm$^{-3/2}$ to 20 cal$^{1/2}$cm$^{-3/2}$;
and have a Refractive Index difference of from 0.1 to 1.5, and
wherein the container is blow molded,
wherein the container comprises multiple layers, wherein said layer is in the outermost layer of said multiple layers, or wherein said layer is in an inner layer of said multiple layers and the outermost layer is transparent or translucent.

2. The container according to Claim 1, wherein said thermoplastic material and said additive form a micro-layering structure in said layer.

3. The container according to Claim 1, wherein said additive is present in an amount of from 0.1% to 2%, by weight of said layer.

4. The container according to Claim 1, wherein said blow molded is extrusion blow molded.

5. The container according to Claim 1, wherein said thermoplastic material is PE, and said PE is selected from the group consisting of low density polyethylene (LDPE), linear low density polyethylene (LLDPE), and a combination thereof.

6. The container according to Claim 1, wherein said additive comprises an alcohol, and said alcohol is selected from the group consisting of ethylene glycol, propylene glycol, glycerol, butanediol, butanetriol, poly(propylene glycol), derivatives thereof, and a combination thereof.

7. The container according to Claim 1, comprising less than about 0.1%, by weight of said layer, of a pearlescent agent.

8. The container according to Claim 1, wherein said layer comprises:

a) from 95% to 99.6%, by weight of said layer,of LDPE having a Total Luminous Transmittance Value of from 53% to 80%; and
b) from 0.1% to 2%, by weight of said layer, of a siloxane fluid having a viscosity of at least about 20 cst under ambient temperature,

wherein said LDPE and said siloxane fluid: have a Solubility Parameter difference of from 0.5 cal$^{1/2}$cm$^{-3/2}$ to 20 cal$^{1/2}$cm$^{-3/2}$ ; have a Refractive Index difference of from 0.1 to 1.5; and form a micro-layering structure in said layer,
wherein the container is extrusion blow molded.

9. The container according to Claim 1, wherein said layer comprises:

a) from 95% to 99.6%, by weight of said layer, of PP having a Total Luminous Transmittance Value of from 53% to 80%; and
b) from 0.1% to 2%, by weight of said layer, of a siloxane fluid having a viscosity of at least 20 cst under ambient temperature,

wherein said PP and said siloxane fluid: have a Solubility Parameter difference of from 0.5 cal$^{1/2}$cm$^{-3/2}$ to 20 cal$^{1/2}$cm$^{-3/2}$ ;have a Refractive Index difference of from 0.1 to 1.5; and form a micro-layering structure in said layer,
wherein the container is extrusion blow molded.

**10.** A process for making the glossy container according to any one of Claims 1 -9 , comprising the steps of:

> a) mixing said thermoplastic material and said additive to form a blow mold blend; and
> b) blowing said blow mold blend obtained in step a) in a mold to form the glossy container.

**11.** The process according to Claim 10, wherein in step a), adding said additive into a carrier to form a masterbatch, and then mixing said masterbatch with said thermoplastic material to form said blow mold blend,
wherein said masterbatch comprises from 10% to 30%, by weight of said masterbatch, of said additive.

**12.** The process according to Claim 10, wherein in step b), blowing said blow mold blend obtained in step a) by extrusion blow molding.

**Patentansprüche**

**1.** Glänzender Behälter, umfassend eine Schicht, wobei die Schicht Folgendes umfasst:

> a) von 86 Gew.-% bis 99,99 Gew.-% der Schicht eines Thermoplastmaterials mit einem Gesamtlichttransmissionswert nach dem hierin beschriebenen Testverfahren von 53 % bis 80 %, wobei das Thermoplastmaterial ausgewählt ist aus der Gruppe bestehend aus Polyethylen (PE), Polypropylen (PP), Polystyrol (PS) und einer Kombination davon; und
> b) von 0,01 Gew.-% bis 5 Gew.-% der Schicht eines Zusatzstoffs, ausgewählt aus der Gruppe bestehend aus einem Alkohol, Öl, Siloxanfluid, Wasser und einer Kombination davon, und wobei der Zusatzstoff ein Pflanzenöl umfasst, ausgewählt aus der Gruppe bestehend aus Sesamöl, Sojaöl, Erdnussöl, Olivenöl, Rizinusöl, Baumwollsamenöl, Palmöl, Canolaöl, Safloröl, Sonnenblumenöl, Maisöl, Tallöl, Reiskleieöl, Derivaten davon und einer Kombination davon,
>
> wobei das Thermoplastmaterial und der Zusatzstoff: eine Löslichkeitsparameterdifferenz gemäß dem hierin beschriebenen Testverfahren von 0,5 cal$^{1/2}$cm$^{-3/2}$ bis 20 cal$^{1/2}$cm$^{-3/2}$ aufweisen; und eine Brechungsindexdifferenz von 0,1 bis 1,5 aufweisen, und wobei der Behälter blasgeformt ist,
> wobei der Behälter mehrere Schichten umfasst, wobei sich die Schicht in der äußersten Schicht der mehreren Schichten befindet, oder wobei sich die Schicht in einer inneren Schicht der mehreren Schichten befindet und die äußerste Schicht transparent oder transluzent ist.

**2.** Behälter nach Anspruch 1, wobei das Thermoplastmaterial und der Zusatzstoff eine Mikroschichtstruktur in der Schicht bilden.

**3.** Behälter nach Anspruch 1, wobei der Zusatzstoff in einer Menge von 0,01 Gew.-% bis 2 Gew.-% der Schicht vorhanden ist.

**4.** Behälter nach Anspruch 1, wobei das Blasformen ein Extrusionsblasformen ist.

**5.** Behälter nach Anspruch 1, wobei das Thermoplastmaterial PE ist und das PE ausgewählt ist aus der Gruppe bestehend aus Polyethylen niedriger Dichte (LDPE), linearem Polyethylen niedriger Dichte (LLDPE) und einer Kombination davon.

**6.** Behälter nach Anspruch 1, wobei der Zusatzstoff ein Alkohol ist, und der Alkohol ausgewählt ist aus der Gruppe bestehend aus Ethylenglykol, Propylenglykol, Glycerin, Butandiol, Poly(propylenglykol), Derivaten davon und einer Kombination davon.

**7.** Behälter nach Anspruch 1, umfassend weniger als etwa 0,1 Gew.-% der Schicht eines Perlglanzmittels.

**8.** Behälter nach Anspruch 1, wobei die Schicht Folgendes umfasst:

> a) von 95 Gew.-% bis 99,6 Gew.-% der LDPE-Schicht mit einem Gesamtlichttransmissionswert von 53 % bis 80 %; und
> b) von 0,1 Gew.-% bis 2 Gew.-% der Schicht eines Siloxanfluids mit einer Viskosität von mindestens etwa 20 cst unter Umgebungstemperatur,

wobei das LDPE und das Siloxanfluid: eine Löslichkeitsparameterdifferenz von 0,5 cal$^{1/2}$cm$^{-3/2}$ bis 20 cal$^{1/2}$cm$^{-3/2}$ aufweisen; eine Brechungsindexdifferenz von 0,1 bis 1,5 aufweisen; und eine Mikroschichtstruktur in der Schicht bilden, wobei der Behälter extrusionsblasgeformt ist.

9. Behälter nach Anspruch 1, wobei die Schicht Folgendes umfasst:

a) von 95 Gew.-% bis 99,6 Gew.-% der PP-Schicht mit einem Gesamtlichttransmissionswert von 53 % bis 80 %; und

b) von 0,1 Gew.-% bis 2 Gew.-% der Schicht eines Siloxanfluids mit einer Viskosität von mindestens 20 cst unter Umgebungstemperatur,

wobei das PP und das Siloxanfluid: eine Löslichkeitsparameterdifferenz von 0,5 cal$^{1/2}$cm$^{-3/2}$ bis 20 cal$^{1/2}$cm$^{-3/2}$ aufweisen; eine Brechungsindexdifferenz von 0,1 bis 1,5 aufweisen; und eine Mikroschichtstruktur in der Schicht bilden, wobei der Behälter extrusionsblasgeformt ist.

10. Verfahren zum Herstellen eines glänzenden Behälters nach einem der Ansprüche 1-9, umfassend die folgenden Schritte:

a) Mischen des Thermoplastmaterials und des Zusatzstoffes, um eine Blasformmischung zu bilden; und

b) Blasen der in Schritt a) erhaltenen Blasformmischung in einer Form, um den glänzenden Behälter zu bilden.

11. Verfahren nach Anspruch 10, wobei in Schritt a) Hinzufügen des Zusatzstoffes in einen Träger zur Bildung eines Masterbatches und anschließendes Mischen des Masterbatches mit dem Thermoplastmaterial zur Bildung der Blasformmischung vorgenommen wird, wobei der Masterbatch von 10 Gew.-% bis 30 Gew.-%, bezogen auf das Gewicht des Masterbatches, des Zusatzstoffes umfasst.

12. Verfahren nach Anspruch 10, wobei in Schritt b) die in Schritt a) erhaltene Blasformmischung durch Extrusionsblasen geblasen wird.

**Revendications**

1. Récipient brillant, comprenant une couche, dans lequel ladite couche comprend :

a) de 86 % à 99,99 %, en poids de ladite couche, d'un matériau thermoplastique ayant une valeur de transmittance lumineuse totale suivant le procédé de test décrit ici allant de 53 % à 80 %, dans lequel ledit matériau thermoplastique est choisi dans le groupe constitué de polyéthylène (PE), polypropylène (PP), polystyrène (PS), et une combinaison de ceux-ci ; et

b) de 0,01 % à 5 %, en poids de ladite couche, d'un additif choisi dans le groupe constitué d'un alcool, d'une huile, d'un fluide de siloxane, d'eau, et d'une combinaison de ceux-ci, et dans lequel ledit additif comprend une huile végétale choisie dans le groupe constitué d'huile de sésame, huile de soja, huile d'arachide, huile d'olive, huile de ricin, huile de graines de coton, huile de palme, huile de canola, huile de carthame, huile de tournesol, huile de maïs, tallöl, huile de son de riz, dérivés de ceux-ci, et une combinaison de ceux-ci,

dans lequel ledit matériau thermoplastique et ledit additif : ont une différence de paramètre de solubilité suivant le procédé de test décrit ici allant de 0,5 cal$^{1/2}$cm$^{-3/2}$ à 20 cal$^{1/2}$cm$^{-3/2}$ ; et ont une différence d'indice de réfraction allant de 0,1 à 1,5, et dans lequel le récipient est moulé par soufflage, dans lequel le récipient comprend de multiples couches, dans lequel ladite couche est dans la couche la plus externe desdites multiples couches, ou dans lequel ladite couche est dans une couche interne desdites multiples couches et la couche la plus externe est transparente ou translucide.

2. Récipient selon la revendication 1, dans lequel ledit matériau thermoplastique et ledit additif forment structure en micro-couches dans ladite couche.

**3.** Récipient selon la revendication 1, dans lequel ledit additif est présent en une quantité allant de 0,1 % à 2 %, en poids de ladite couche.

**4.** Récipient selon la revendication 1, dans lequel ledit moulé par soufflage est moulé par extrusion-soufflage.

**5.** Récipient selon la revendication 1, dans lequel ledit matériau thermoplastique est du PE, et ledit PE est choisi dans le groupe constitué de polyéthylène basse densité (PEBD), polyéthylène linéaire basse densité (PELBD), et une combinaison de ceux-ci.

**6.** Récipient selon la revendication 1, dans lequel ledit additif comprend un alcool, et ledit alcool est choisi dans le groupe constitué d'éthylène glycol, propylène glycol, glycérol, butane-diol, butane-triol, poly(propylène glycol), dérivés de ceux-ci, et une combinaison de ceux-ci.

**7.** Récipient selon la revendication 1, comprenant moins d'environ 0,1 %, en poids de ladite couche, d'un agent nacrant.

**8.** Récipient selon la revendication 1, dans lequel ladite couche comprend :

a) de 95 % à 99,6 %, en poids de ladite couche, de PEBD ayant une valeur de transmittance lumineuse totale allant de 53 % à 80 % ; et
b) de 0,1 % à 2 %, en poids de ladite couche, d'un fluide de siloxane ayant une viscosité d'au moins environ 20 cSt à température ambiante,

dans lequel ledit PEBD et ledit fluide de siloxane : ont une différence de paramètre de solubilité allant de $0,5 \, cal^{1/2}cm^{-312}$ à $20 \, cal^{1/2}cm^{-3/2}$ ; ont une différence d'indice de réfraction allant de 0,1 à 1,5 ;
et forment une structure en micro-couches dans ladite couche,
dans lequel le récipient est moulé par extrusion-soufflage.

**9.** Récipient selon la revendication 1, dans lequel ladite couche comprend :

a) de 95 % à 99,6 %, en poids de ladite couche, de PP ayant une valeur de transmittance lumineuse totale allant de 53 % à 80 % ; et
b) de 0,1 % à 2 %, en poids de ladite couche, d'un fluide de siloxane ayant une viscosité d'au moins 20 cSt à température ambiante,

dans lequel ledit PP et ledit fluide de siloxane : ont une différence de paramètre de solubilité allant de $0,5 \, cal^{1/2}cm^{-3/2}$ à $20 \, cal^{1/2}cm^{-3/2}$ ; ont une différence d'indice de réfraction allant de 0,1 à 1,5 ; et forment une structure en micro-couches dans ladite couche,
dans lequel le récipient est moulé par extrusion-soufflage.

**10.** Procédé de fabrication du récipient brillant selon l'une quelconque des revendications 1 à 9, comprenant les étapes consistant à :

a) mélanger ledit matériau thermoplastique et ledit additif pour former un mélange de moulage par soufflage ; et
b) souffler ledit mélange de moulage par soufflage obtenu à l'étape a) dans un moule pour former le récipient brillant.

**11.** Procédé selon la revendication 10, dans lequel à l'étape a), on ajoute ledit additif dans un support pour former un mélange-maître, puis on mélange ledit mélange-maître avec ledit matériau thermoplastique pour former ledit mélange de moulage par soufflage,
dans lequel ledit mélange-maître comprend de 10 % à 30 %, en poids dudit mélange-maître, dudit additif.

**12.** Procédé selon la revendication 10, dans lequel à l'étape b), on souffle ledit mélange de moulage par soufflage obtenu à l'étape a) par moulage par extrusion-soufflage.

FIG 1

FIG 2A

FIG **2B**

FIG **3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 12062215 A

**Non-patent literature cited in the description**

- **BARTON, AFM.** Handbook of Solubility Parameters and Other Cohesion Parameters. CRC Press, 1991

- **JOHN BURKE.** Solubility Parameters: Theory and Application. The Oakland Museum of California, 1984